# EUROPÄISCHE PATENTSCHRIFT

(11) **EP 1 447 310 B1**
(45) Veröffentlichungstag und Bekanntmachung des Hinweises auf die Patenterteilung: **25.01.2006**
(21) Anmeldenummer: 03026291.9
(22) Anmeldetag: 15.11.2003
(51) Int. Cl.: B62D 27/02

(54) **Kraftfahrzeugbauteil**
Motor vehicle structural component
Elément de structure pour véhicule automobile

(30) Priorität: 13.02.2003 DE 10306180
(43) Veröffentlichungstag der Anmeldung: 18.08.2004
(73) Patentinhaber: Benteler Automobiltechnik GmbH, 33104 Paderborn (DE)
(72) Erfinder: Göer, Peter, 33129 Delbrück (DE); Müller, Oliver, 33100 Paderborn (DE)
(74) Vertreter: Ksoll, Peter

(56) Entgegenhaltungen:
- DE-A- 19 802 152
- DE-C- 19 533 138
- GB-A- 807 002
- NN-A-
- US-A- 2 321 201

## Beschreibung

Die Erfindung betrifft ein Verfahren zur Herstellung eines Kraftfahrzeugbauteils aus einem Blechprofil mit zumindest einem Gewindeanschluss.

Aus der DE 198 02 152 A1 geht eine Anordnung zur Befestigung eines ersten Blechteils an einem zweiten Blechteil mittels einer Schrauben-Mutter-Verbindung hervor. Die Anordnung ist so gestaltet, dass eine befestigungsbedingte Deformierung des ersten Blechteils vermieden wird. Dazu ist die Mutter als Blechmutter mit einem Flansch ausgebildet und weist an diesem schraubenkopfseitig innerhalb des von Buckeln begrenzten Bereichs konzentrische Erhebungen auf, beispielsweise in Form einer Ringwulst, die durch eine Ausnehmung in der der Blechmutter zugewandten Wandung hindurch ragend an der schraubenkopfseitigen Wandung abgestützt angeordnet sind. Die Höhendifferenz zwischen der Ringwulst, den Ringwulstsegmenten oder den Erhebungen und den Buckeln ist größer als die Dicke der blechmutterseitigen Wandung.

Im Umfang der US 2 321 201 A zählt eine Anordnung mit einer Platte und einer geschweißten Mutter zum Stand der Technik, bei der die Mutter mit Vorsprüngen in Ausnehmungen der Platte oder Vorsprünge an der Platte in Ausnehmungen an der Mutter eingreifen und die Mutter mit der Platte verschweißt ist.

Aus der DE 195 33 138 C1 geht eine Vorrichtung zur Verbindung von Blechteilen einer Rohbaukarosserie eines Kraftfahrzeugs hervor. Eine Gewindemutter ist in einem Käfig schwimmend gelagert. Der Käfig ist im Bereich einer Durchtrittsöffnung an einem Bauteil fixierbar. Über eine in die Gewindemutter eingeschraubte Schraube werden die Blechteile miteinander verbunden. Die Gewindemutter ist im unverschraubten Zustand mittels eines Halters in radialem Abstand zum Käfig und in axialem Abstand zu der Durchtrittsöffnung gehalten.

Auch die GB 807 002 A befasst sich mit der Ausbildung einer Käfigmutter.

Um Kraftfahrzeugbauteile aus höchstfestem Stahl herzustellen, wird unter anderem das sogenannte Warmumformen eingesetzt. Bei diesem Verfahren wird eine Platine in einer Presse umgeformt und mit hoher Geschwindigkeit beim bzw. unmittelbar nach dem Umformen abgekühlt. Dadurch bleibt das austhenetische Gefüge des Stahls erhalten. Stähle mit dieser Festigkeit bzw. Blechprofile hieraus lassen sich allerdings nur schwer weiterverarbeiten.

Im Kraftfahrzeugbau müssen auf diese Weise hergestellte Halbzeuge bzw. Blechprofile in der Regel noch veredelt werden. So ist es üblich, dass an warm umgeformten Bauteilen z.B. bei Querträgern, bei A-, B- oder C-Säulen der Karosserie ebenso wie in Türaufprallträgern Schweißbolzen oder Schweißmuttern positioniert werden müssen. Für solche Fügeverfahren sind am Bauteil sehr genaue Durchbrüche bzw. Positionierungsmöglichkeiten vorzusehen.

Durchbrüche, die in der Ausgangsplatine eingebracht werden, sind nach dem Umformen aufgrund der benötigten Toleranzen zu ungenau. Für ein direktes Aufbringen von Schweißmuttern oder Schweißbolzen kommen diese Durchbrüche daher nicht in Frage. Als Folge bleibt nur die Möglichkeit, die Bauteile nach dem Umformen zu bearbeiten, beispielsweise durch Einbringen der Durchbrüche mit Hilfe eines Laserbeschnittes oder einer zusätzlichen Kalibrier- und Lochstufe im Werkzeug. Solche zusätzlichen Arbeitsschritte sind jedoch kapitalaufwendig, weil zusätzliche Arbeitsgänge, teure Laserbearbeitung und größere Pressen nötig sind. Hieraus resultieren höhere Stückpreise der Kraftfahrzeugbauteile. Des Weiteren werden aufgrund des hohen Verschleißes der Lochstempel und der Kalibrierstufen der Wartungsaufwand und die instandhaltungskosten erhöht bzw. die Werkzeugstandzeiten verringert.

Der Erfindung liegt daher die Aufgabe zugrunde, ein rationelles und ökonomisches Verfahren zur Herstellung eines Kraftfahrzeugbauteils aus Blechprofil mit zumindest einem Gewindeanschluss aufzuzeigen.

Die Lösung dieser Aufgabe ist in Patentanspruch 1 aufgezeigt. Das Blechprofil wird in einem oder mehreren Arbeitsgängen pressformtechnisch aus einer Platine hergestellt. Bereits in der Ausgangsplatine beim Platinenbeschnitt oder an einem Halbzeug bzw. Vorformling oder dem Blechprofil wird eine Durchbrechung erzeugt. Die Dimensionierung der Durchbrechung erfolgt ausreichend groß, so dass alle möglichen im Fertigungsverfahren auftretenden Toleranzen berücksichtigt sind. In einer nachfolgenden Fügeoperation wird die Durchbrechung von einem Scheibenkörper abgedeckt, welcher einen Gewindeanschluss besitzt. Der Scheibenkörper ist in seiner Erstreckung so dimensioniert, dass er die Durchbrechung randseitig überlappt und hier an das Profil gefügt werden kann. Der Scheibenkörper wird beim Fügevorgang durch eine Positioniereinheit lageorientiert. In der Positioniereinheit wird der Scheibenkörper zusammen mit dem Gewindeanschluss formschlüssig aufgenommen und in seiner bauteilgerechten Lage am Blechprofil positioniert. Anschließend wird der Scheibenkörper mit dem Blechprofil verbunden, wobei der Scheibenkörper beim Fügevorgang bereichsweise schubumgeformt wird. Der Scheibenkörper wird in einer Positioniereinheit gehalten und lagegerecht am Profilbauteil im Bereich der Durchbrechung positioniert. Eine untere Matritzeneinheit stützt das Blechprofil und den Scheibenkörper ab, während eine obere Stempeleinheit den Scheibenkörper mit dem Gewindeanschluss umgreift, positioniert und umformt. So gehalten wird der Scheibenkörper dann mit dem Blechprofil gefügt, vorzugsweise mittels Widerstandsschweißung. Die Position des Gewindeanschlusses ist exakt in der für die weitere Verwendung des Kraftfahrzeugbauteils erforderlichen Position festgelegt.

Die Positionierung des Scheibenkörpers mit dem Gewindeanschluss auf dem Blechprofil kann in einer Positioniereinheit beispielsweise hydraulisch durchgeführt werden. Anschließend kann der Fügeprozess stattfinden. Vorzugsweise erfolgt eine Verschweißung des Scheibenkörpers mit dem Blechprofil.

Grundsätzlich ist die erfindungsgemäße Vorgehensweise für warm und kalt umgeformte Blechprofile anwendbar. Die mit dem erfindungsgemäßen Verfahren verbundenen Vorteile, wie geringere Werkzeug-, Vorrichtungs- und Maschinenkosten ebenso wie eine längere Standzeit der Werkzeuge sind sowohl bei der Kaltumformung als auch bei der Warmumformung gegeben.

Besonders vorteilhaft machen sich die Vorzüge der Erfindung bei Warmformbauteilen bemerkbar. Nach den Merkmalen von Patentanspruch 2 wird deshalb das Blechprofil warmgeformt und gehärtet, wonach der Scheibenkörper anschließend gefügt wird. Hierbei sind unterschiedliche Fügeverfahren für die Festlegung des Scheibenkörpers am Blechprofil möglich.

Es besteht auch die Möglichkeit, die Positioniereinheit für den Gewindeanschluss mit in die Werkzeugstufen des Warmformwerkzeugs zu integrieren. Die vorgefertigten Einheiten aus Gewindeanschluss und Scheibenkörper werden über eine Zuführeinheit eingebracht und dann im Warmformwerkzeug während der Umformung bzw. in entsprechend zeitlicher und logischer Reihenfolge abgestimmt am Blechprofil positioniert und festgelegt. Mit dieser Vorgehensweise verbindet sich insbesondere der Vorteil, dass Werkzeugkosten erheblich gesenkt und die Toleranzfelder für Anbauteile auf ein Minimum beschränkt werden können. Sich aus den vorhergehenden Fertigungsstufen ergebende Toleranzen können unberücksichtigt bleiben. Die einzige Toleranz, die berücksichtigt werden muss, ist die in der Positioniereinheit.

Bei einem nach dem erfindungsgemäßen Verfahren hergestellten Kraftfahrzeugteil ist im Blechprofil zumindest eine Durchbrechung vorgesehen, welche durch einen mit einem Gewindeanschluss versehenen Scheibenkörper abgedeckt ist, wobei der Scheibenkörper eine gegenüber der Durchbrechung größere Erstreckung besitzt und am die Durchbrechung umgebenden Rand mit dem Blechprofil überlappend gefügt ist. Der Scheibenkörper ist tellerförmig konfiguriert. Der Rand des Scheibenkörpers kann durchgehend oder aber auch unterbrochen sein. Mit dem Rand wird der Scheibenkörper am Blechprofil gefügt. Die tellerförmige Ausführung ermöglicht eine besonders vorteilhafte Lageorientierung relativ zum Blechprofil in einer Positioniereinheit. Der Gewindeanschluss ist schweißtechnisch mit dem Scheibenkörper verbunden.

Bei dem Gewindeanschluss kann es sich um eine Gewindemutter oder um einen Gewindebolzen handeln.

In vorteilhafter Weise wird der Durchbruch bereits an der Ausgangsplatine im Platinenbeschnitt erzeugt. Die Dimensionierung des Durchbruchs kann so ausgelegt werden, dass alle zu erwartenden Toleranzen, die während der Fertigung des Blechprofils entstehen können, berücksichtigt sind. Der Scheibenkörper weist den Gewindeanschluss auf und ist in seinen Abmessungen, was die seitliche Erstreckung anbelangt, größer als die Durchbrechung ausgeführt. Der Scheibenkörper deckt so die Durchbrechung vollständig ab und ist am die Durchbrechung umgebenden Rand mit dem Blechprofil überlappend gefügt.

Der Scheibenkörper mit dem Gewindeanschluss kann folglich den Bauteilanforderungen gerecht positioniert und automatisiert gefügt werden. Die genaue Positionierung des Gewindeanschlusses erfolgt beim Fügeprozess. Etwaige Toleranzen oder Ungenauigkeiten aus dem Umformprozess werden so ausgeglichen. Vorzugsweise erfolgt eine schweißtechnische Festlegung der Scheibenkörper. Grundsätzlich sind aber auch andere Fügeverfahren möglich, beispielsweise eine klebetechnische Verbindung.

Für die Fügung sowohl des Gewindeanschlusses an dem Scheibenkörper als auch des Scheibenkörpers mit dem Blechprofil kommen sowohl Pressschweißverfahren als auch Schmelzschweißverfahren in Frage. Für die Praxis sehen wird die Verbindung von Gewindeanschluss und Scheibenkörper durch Reibschweißen als besonders vorteilhaft angesehen. Die Festlegung des Scheibenkörpers am Blechprofil erfolgt bevorzugt durch Widerstandsschweißen.

Die erfindungsgemäße Herstellung eines Kraftfahrzeugbauteils ist rationell und kostengünstig. Durch das beschriebene Fertigungsverfahren können Werkzeug-, Vorrichtungs- und Maschinenkosten gesenkt werden. Das Toleranzfeld für Anbauteile wird verkleinert, da die einzigen Toleranzen für die Gewindeanschlüsse (Gewindebolzen, Gewindemuttern), die der Positioniereinheit sind.

Vorteilhaft ist ferner, dass die Gewindeanschlüsse aufgrund ihrer Fügung an den Scheibenkörpern wesentlich fester auszuführen sind, sie setzen also Schwerkräften eine höheren Widerstand entgegen und reißen, wenn überhaupt, nur unter gegenüber bisherigen Ausführungen höherer Last ab.

Die Erfindung ist nachfolgend anhand von Ausführungsbeispielen näher beschrieben. Es zeigen:
- Figur 1: in einer vertikalen Schnittdarstellung einen Ausschnitt eines Kraftfahrzeugbauteils aus einem Blechprofil mit Gewindeanschluss;
- Figur 2: ebenfalls in einem Vertikalschnitt einen Ausschnitt aus einem Kraftfahrzeugbauteil;
- Figur 3: wiederum im Vertikalschnitt eine weitere Ausführungsform eines erfindungsgemäßen Kraftfahrzeugbauteils.

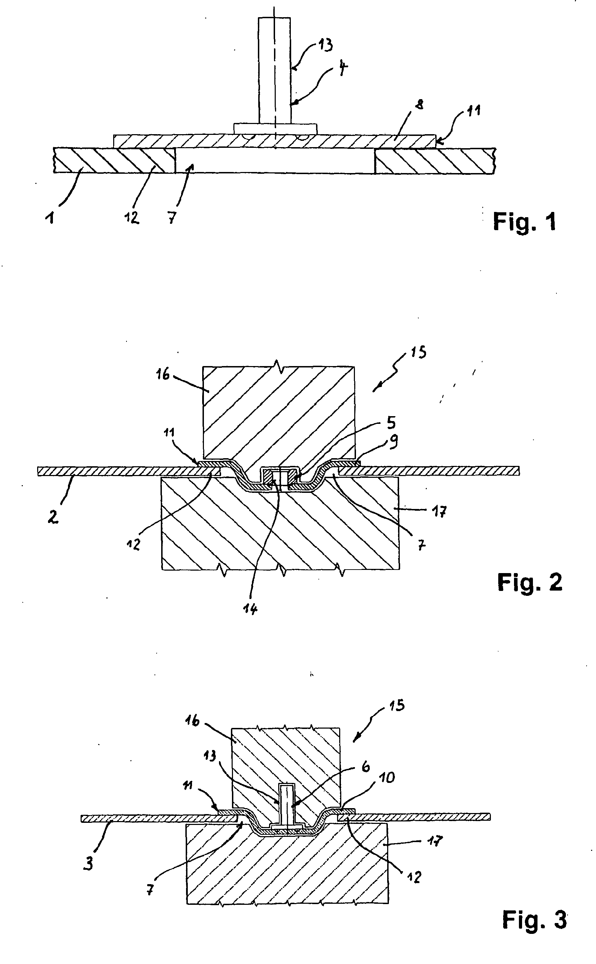

Die Figuren 1 bis 3 zeigen jeweils einen Ausschnitt aus einem Kraftfahrzeugbauteil. Die Kraftfahrzeugbauteile sind aus einem Blechprofil 1, 2, 3 gefertigt und besitzen mindestens einen Gewindeanschluss 4, 5, 6.

Jedes Blechprofil 1, 2 oder 3 wird in einem oder mehreren Arbeitsgängen pressformtechnisch aus einer Platine hergestellt. In den Blechprofilen 1, 2, 3 ist zumindest eine Durchbrechung 7 vorgesehen. Diese kann an der Ausgangsplatine, an einem Halbzeug oder am fertigen Blechprofil 1, 2, 3 erzeugt werden.

Besonders vorteilhaft wird die Durchbrechung 7 in einer Ausgangsplatine aus härtbarem Stahl erzeugt. Diese wird dann in einem Pressenwerkzeug warm umgeformt, und zwar bei einer Temperatur zwischen 700°C und 1.100°C. Noch im Pressenwerkzeug eingespannt wird das Blechprofil 1, 2, 3 dann durch schnelle Abkühlung gehärtet, während das Blechprofil 1, 2, 3 im Pressenwerkzeug verbleibt. Da das Blechprofil 1, 2, 3 bei der im Zuge des Härtungsvorgangs vorgenommene Kühlung im Pressenwerkzeug eingespannt ist, erhält man ein Blechprofil 1, 2, 3 mit guter Maßhaltigkeit.

Im Zuge der Fertigung des Kraftfahrzeugbauteils wird die Durchbrechung 7 von einem Scheibenkörper 8, 9, 10 abgedeckt, welcher mit dem Gewindeanschluss 4, 5, 6 versehen ist. Der Scheibenkörper 8, 9, 10 besitzt eine gegenüber der Durchbrechung 7 umfangsseitig größere Erstreckung 11 und ist am die Durchbrechung 7 umgebenden Rand 12 mit dem Blechprofil 1, 2, 3 überlappend gefügt.

Bei dem Gewindeanschluss 4 bzw. 6 handelt es sich, wie in Figur 1 und 3 dargestellt, um einen Gewindebolzen mit Außengewinde 13. Der Gewindeanschluss 5 ist eine Gewindemuttermit Durchgangsgewinde 14, wie Figur 2 zeigt. Die Gewindeanschlüsse 4, 5, 6 selbst sind mit dem Scheibenkörper 8, 9, 10 verschweißt, insbesondere reibverschweißt.

Durch die erfindungsgemäß vorgesehene Art der indirekten Fügung des Scheibenkörpers 8, 9, 10 kann mit größeren Toleranzen im Blechprofil 1, 2, 3 gearbeitet werden. Dies ermöglicht ein Einbringen der Durchbrüche 7 bereits im Platinenbeschnitt. Die Durchbrüche 7 können so ausgelegt werden, dass alle zu erwartenden Toleranzen die während der Fertigung des Blechprofils 1, 2, 3 entstehen können, berücksichtigt sind.

Wie anhand der Figuren 2 und 3 zu erkennen, kann der Scheibenkörper 9, 10 tellerförmig konfiguriert sein. Diese Formgebung kann auch beim Fügevorgang mit dem Blechprofil 2, 3 erfolgen, indem der Scheibenkörper 9, 10 während der Positionierung und Festlegung schubumgeformt wird. Zur Positionierung und Kalibrierung des Scheibenkörpers 9, 10 mit dem Gewindeanschluss 5, 6 ist eine Postioniereinheit 15 vorgesehen, bestehend aus einem Oberteil 16 und einem Unterteil 17. Die Positioniereinheit 15 kann hydraulisch arbeiten und auch zur Umformung der Scheibenkörper 9, 10 dienen. Nach der Positionierung und Ausrichtung der Scheibenkörper 9, 10 erfolgt die randseitige Festlegung im Überlappungsbereich am Rand 12 der Blechprofile 2, 3.

Die Erfindung ermöglicht eine rationale Herstellung von Kraftfahrzeugbauteilen, wobei die Werkzeugkosten erheblich gesenkt werden können und die Toleranzfelder für Anbauteile auf ein Minimum beschränkt werden können. Die einzige Toleranz die berücksichtigt werden muss ist die in der Positioniereinheit 15.

### Bezugszeichenaufstellung

- 1 -: Blechprofil
- 2 -: Blechprofil
- 3 -: Blechprofil
- 4 -: Gewindeanschluss
- 5 -: Gewindeanschluss
- 6 -: Gewindeanschluss
- 7 -: Durchbrechung
- 8 -: Scheibenkörper
- 9 -: Scheibenkörper
- 10 -: Scheibenkörper
- 11 -: Erstreckung v. 8, 9, 10
- 12-: Rand v. 7
- 13 -: Außengewinde
- 14 -: Durchgangsgewinde
- 15 -: Positioniereinheit
- 16 -: Oberteil
- 17 -: Unterteil

## Patentansprüche

1. Verfahren zur Herstellung eines Kraftfahrzeugbauteils aus einem Blechprofil mit zumindest einem Gewindeanschluss (4, 5, 6), wobei das Blechprofil in einem oder mehreren Arbeitsgängen pressformtechnisch aus einer Platine hergestellt wird, **dadurch gekennzeichnet, dass** in der Platine, einem Vorformling oder dem Blechprofil eine Durchbrechung (7) erzeugt wird, welche in einer nachfolgenden Fügeoperation von einem Scheibenkörper (8, 9, 10) abgedeckt wird, welcher mit dem Gewindeanschluss (4, 5, 6) versehen ist, wobei der Scheibenkörper (8, 9, 10) die Durchbrechung (7) randseitig überlappt und an das Blechprofil (1, 2, 3) gefügt wird, wobei der Scheibenkörper (8, 9, 10) beim Fügevorgang durch eine Positioniereinheit (15) lageorientiert und beim Fügevorgang bereichsweise schubumgeformt wird.

2. Verfahren nach Anspruch 1, **dadurch gekennzeichnet, dass** das Blechprofil (1, 2, 3) warmgeformt und gehärtet wird, wonach der Scheibenkörper (8, 9, 10) gefügt wird.

## Claims

1. Method for producing a motor vehicle structural component from a sheet-metal section with at least one threaded connection (4, 5, 6), the sheet-metal section being produced from a sheet-metal blank by press-forming in one or more working steps, **characterized in that** an aperture (7) is produced in the sheet-metal blank, a preform or the sheet-metal section, which aperture is covered in a following joining operation by a disc body (8, 9, 10) which is provided with the threaded connection (4, 5, 6), the disc body (8, 9, 10) overlapping the aperture (7) on the edge side and being joined to the sheet-metal section (1, 2, 3), the disc body (8, 9, 10) being oriented in position during the joining process by means of a positioning unit (15) and in some regions being formed under shearing conditions during the joining process.

2. Method according to Claim 1, **characterized in that** the sheet-metal section (1, 2, 3) is hot-formed and hardened, after which the disc body (8, 9, 10) is joined.

## Revendications

1. Procédé pour la fabrication d'un élément de structure d'un véhicule automobile en tôle profilée avec au moins un raccord fileté (4, 5, 6), dans lequel la tôle profilée est fabriquée à partir d'un larget dans une technique de façonnage à la presse en une ou plusieurs passes de travail,
**caractérisé en ce que** dans le larget, ébauche ou tôle profilée, il est produit une ouverture (7) qui, lors d'une opération d'assemblage consécutive est recouverte d'un corps de disque (8, 9, 10) qui est muni du raccord fileté (4, 5, 6), dans lequel le corps de disque (8, 9, 10) chevauche marginalement l'ouverture (7) et est abouté à la tôle profilée (1, 2, 3), dans lequel le corps de disque (8, 9, 10) lors de l'opération d'assemblage est orienté en position par une unité de positionnement (15) et lors du procédé d'assemblage est déformé partiellement par déformation plastique par poussée.

2. Procédé selon la revendication 1, **caractérisé en ce que** la tôle profilée (1, 2, 3) est formée à chaud et durcie, après quoi est abouté le corps de disque (8, 9, 10).
